# EUROPÄISCHE PATENTSCHRIFT

(11) **EP 1 557 920 B1**
(45) Veröffentlichungstag und Bekanntmachung des Hinweises auf die Patenterteilung: **08.11.2006**
(21) Anmeldenummer: 05000997.6
(22) Anmeldetag: 19.01.2005
(51) Int. Cl.: H02G 1/12

(54) **Abisolierzange mit automatischer Anpassung an verschiedene Leiterquerschnitte**
Stripping pliers with automatic adjustment to different cross-sections
Pince à dénuder avec adaptation automatique à des sections transversales différentes.

(30) Priorität: 22.01.2004 DE 102004003462
(43) Veröffentlichungstag der Anmeldung: 27.07.2005
(73) Patentinhaber: Rennsteig Werkzeuge GmbH, 98547 Viernau/Thür (DE)
(72) Erfinder: Hofmann, Horst, 98587 Unterschönau (DE); Wilhelm, Edgar, 98587 Altersbach (DE)
(74) Vertreter: Engel, Christoph Klaus

(56) Entgegenhaltungen:
- WO-A-91/13481
- DE-A1- 4 420 006
- DE-C1- 4 420 050
- US-A- 5 713 249

## Beschreibung

Die vorliegende Erfindung betrifft eine Abisolierzange mit automatischer Anpassung an verschiedene Leiterquerschnitte und Isolationsdicken mit zwei Paaren schwenkbar gelagerter Backen, von denen die Backen des einen, äußeren Paares, als Greifbacken ausgeführt sind und über einen ersten Zangenarm und ein Backenteil, die einen gemeinsamen Drehpunkt besitzen, bewegbar sind, und die Backen des anderen, inneren Paares, als Schneidbacken mit in die Isolation schneidend eindringenden Schneidmessern ausgeführt sind, und mit einer an den Schneidbacken befestigten, im Zangenkörper in Längsrichtung beweglichen, eine Abstreifbewegung bewirkenden Zugstange, die über einen Hebel mit einem zweiten Zangenarm verbunden ist.

Es sind vielfältige Zangen und ähnliche Handwerkzeuge bekannt, die zum Abisolieren von elektrischen Kabeln verwendet werden. Verglichen mit traditionellen Kabelmessern bieten einstellbare oder fest eingestellte Abisolierzangen höhere Sicherheit für den Bearbeiter und das Kabelmaterial. Um eine hochwertig leitende Verbindung zu erhalten, muss sichergestellt sein, dass der elektrische Leiter (ein- oder mehradrig) beim Abisolieren unbeschädigt bleibt. Wichtig ist dabei vor allem, dass die Ummantelung am Kabelende und auch die Isolierung der Einzelleiter im Kontaktbereich sauber und längengerecht entfernt werden kann. Der große Vorteil einer herkömmlichen Automatik-Abisolierzange ist die Möglichkeit, in einem Arbeitsgang die Isolation einzuschneiden und nachfolgend - mit dem weiteren Zusammenpressen der Handgriffe der Zange - von dem Leiter abzuziehen. Eine Anpassung an unterschiedliche Isolations- und Kabeldicken musste bisher aber durch manuelle Einstellung der Zange oder Vorsehung mehrerer Klingen mit unterschiedlichen Formen erfolgen. Durch fehlerhafte Bedienung bzw. Einstellung war dabei immer die Gefahr einer Leiterbeschädigung gegeben.

In der DE 44 20 006 A1 ist beispielsweise eine Zange zum Abisolieren von Leiterenden mit einem äußeren Haltebackenpaar und einem inneren Schneidbackenpaar beschrieben. Eine beschränkte Anpassung an den Kabelquerschnitt erfolgt anhand des Widerstandes, den die Haltebacken am zusammengepressten Kabelmantel finden. Bei Kabeln mit sehr kleinem Durchmesser wird das Zusammenpressen durch einen zusätzlichen Anschlag begrenzt. Allerdings ist dabei eine Anpassung an verschiedene Isolationsmaterialdicken nicht möglich. Damit besteht die Gefahr, dass bei harten Isolationsmaterialien zu wenig bzw. bei weicheren Isolationsmaterialen zu tief eingeschnitten wird. Als Folge davon können Unregelmäßigkeiten am abzumantelnden Kabel bzw. eine Leiterbeschädigung auftreten.

Die EP 0 645 861 A2 beschreibt eine Abisolierzange mit zwei Paaren schwenkbar gelagerter Backen, von denen die Backen des äußeren Paares als Greifbacken und die Backen des anderen, inneren Paares als Schneidbacken mit in die Isolation schneidend eindringenden Schneidmessern ausgeführt sind. Eine Anpassung an verschiedene Leiterquerschnitte und Isolationsdicken wird durch einen Excenter ermöglicht. Durch Verdrehung des Excenters kann der Bediener die Lage des unteren Schneidbackens und damit des zugehörigen Schneidmessers verändern.

Aus der DE 44 20 050 C1 ist eine Abisolierzange bekannt, bei der zumindest eine Schneidbacke ein Paket von nebeneinander liegenden und quer zur Maullängsrichtung bewegbaren Lamellen mit Schneidkanten aufweist, welche beim Schließen der Zange in die Leiterisolation eindringen. Die Lamellen werden durch einen Klemmarm mit einer V-förmigen Ausnehmung abgestützt. Eine Anpassung an verschiedene Leiterquerschnitte findet dadurch statt, dass diese Ausnehmung schlanker oder breiter ausgebildet ist. Für die Abisolierung unterschiedlicher Leiterquerschnitte ist es demnach erforderlich, Klemmarme mit unterschiedlichen Ausnehmungen vorzuhalten, die vom Bediener ausgewählt und in die Abisolierzange eingesetzt werden müssen.

Die Aufgabe der vorliegenden Erfindung besteht somit darin, eine Abisolierzange dahingehend zu verbessern, dass auf einfache Art und Weise eine automatische Anpassung der Einschneidtiefe der Schneidmesser an unterschiedliche Leiterquerschnitte, Isolationsdicken und Isolationsmaterialien ermöglicht wird.

Diese Aufgabe wird durch die erfindungsgemäße Abisolierzange gelöst, bei der mindestens ein Gleitkeil in einer an die Form des Gleitkeils angepassten Aussparung im ersten Zangenarm oder im Backenteil gelagert ist, wobei eine zu den Schneidbacken gewandte erste Gleitkeilfläche eben ist und eine in der Aussparung anliegende zweite Gleitkeilfläche so geformt ist, dass sich der Abstand zwischen beiden Gleitkeilflächen von einem mittleren Bereich des Gleitkeils ausgehend zumindest zu einem der beiden Gleitkeilenden hin verringert. Beim Öffnen der Abisolierzange erfolgt ein Verschieben des Gleitkeils in Längsrichtung mit gleichzeitiger Lageanpassung des Gleitkeils quer zur Längsrichtung, die eine automatische Schneidtiefenverstellung der Schneidmesser bewirkt.

Durch die Verwendung eines solchen Gleitkeils wird auf einfache Art und Weise eine Verstellung der Schneidbacken zur Anpassung der Einschnitttiefe in die Isolation ermöglicht. Je nach dem, ob im ersten Zangenarm, im Backenteil oder in beiden Elementen ein entsprechender Gleitkeil vorhanden ist, ist entweder eine oder sind auch beide Schneidbacken verstellbar. Durch eine entsprechende Formgestaltung der in der Aussparung von erstem Zangenarm bzw. Backenteil gelagerten zweiten Gleitkeilfläche kann auch eine herstellerseitige Grundanpassung an die für verschiedene Isolationsmaterialien erforderliche Einschneidtiefe erfolgen.

Mit der erfindungsgemäßen Abisolierzange wird erstmals eine automatische Anpassung der Einschneidtiefe der Schneidmesser der Schneidbacken sichergestellt, die den Einsatz der Zange für Kabelquerschnitte im Bereich von etwa 0,5 mm² bis 10 mm² gestattet.

Gemäß einer besonders vorteilhaften Ausführungsform der Abisolierzange sind ein erster Gleitkeil in einer Aussparung im ersten Zangenarm und ein zweiter, gleichartig gestalteter Gleitkeil in einer Aussparung im Backenteil gelagert. Dabei hat sich für die zweite Gleitkeilfläche der Gleitkeile eine Kreisbogenform als besonders günstig erwiesen. Dadurch kommt es von einem mittleren Bereich der Gleitkeile ausgehend zu beiden Gleitkeilenden hin zu einer Verringerung des Abstandes zwischen beiden Gleitkeilflächen. Bei dieser Ausführungsform sind beide Schneidbacken tiefenverstellbar, womit immer ein beidseitiges, gleichmäßiges sauberes Schneiden gewährleistet ist. Bei abgewandelten Ausführungsformen kann die zweite Gleitfläche aber auch einen anderen, beispielsweise in einer schräg zur Ebene der ersten Gleitkeilfläche liegenden Verlauf aufweisen, so dass sich ein nur einseitige keilförmiger Gleitkeil ergibt.

Zweckmäßig ist, wenn bei einer weiteren Ausführungsform die dem Gleitkeil zugewandte Seite der Schneidbacken eine erste und eine zweite Erhöhung aufweisen. Die erste Erhöhung sorgt für eine punktförmige Auflage der Schneidbacken auf der ersten Gleitkeilfläche. Dadurch, dass nur eine derartige Auflage und keine vollflächige Auflage zwischen Schneidbacken und Gleitkeilfläche besteht, kann die Reibung der Schneidbacken auf den Gleitkeilflächen minimiert und damit eine ruckfreie Verschiebung der Gleitkeile sichergestellt werden.

Nach einer weiteren vorteilhaften Ausführungsform besitzen die Greifbacken jeweils einen erhöhten Greifzahn, vorzugsweise an dem den Scheidbacken zugewandten Ende der Greifbacken. Der erhöhte Greifzahn und die Schneidmesser weisen dabei einseitige spiegelbildlich ausgebildete Schneidschrägen auf. Beim Schließen der Zange schneidet der erhöhte Greifzahn geringfügig in das Kabel ein, womit eine zusätzliche Fixierung der am Kabel verbleibenden Isolation erreicht wird.

Bei einer weiteren zweckmäßigen Ausführungsform wird durch die Form der zweiten Gleitkeilflächen beim Verschieben der Gleitkeile in Längsrichtung eine leichte Schrägstellung der ersten Gleitkeilflächen zueinander erreicht. Dies bewirkt beim Entlangführen der Schneidbacken während des Abstreifens eine leichte Öffnung der Schneidbacken. Damit können Unregelmäßigkeiten am abzumantelnden Kabel ausgeglichen und eine Beschädigung der Adern verhindert werden.

Weiterhin ist es vorteilhaft, die Schneidmesser lösbar an den Schneidbacken zu befestigen. Bevorzugt sind die Schneidmesser an den den Greifbacken zugewandten Vorderseiten der Schneidbacken angeschraubt. Dadurch können sie bei Verschleiß leicht ausgetauscht werden bzw. durch andere, an den Einsatzzweck angepasste Schneidmesser ersetzt werden. Denkbar ist auch der Einsatz von Formklingen, wenn härtere Isolationsmaterialien, wie beispielsweise Teflon, verarbeitet werden müssten.

Bevorzugt sind die Greifbacken in Aufnahmebacken lösbar befestigt. Bei Verschleiß kann also auch hier ein einfacher Wechsel der Greifbacken erfolgen. Außerdem können die Greifbacken in ihrer Höhe verstellt werden, womit eine Anpassung der Eindringtiefe möglich wird.

Weitere Vorteile, Einzelheiten und Weiterbildungen ergeben sich aus der nachfolgenden Beschreibung einer bevorzugten Ausführungsform der Abisolierzange, unter Bezugnahme auf die Zeichnung. Es zeigen:
- Fig. 1: eine Gesamtansicht einer erfindungsgemäßen Abisolierzange mit geöffnetem Zangenmaul;
- Fig. 2: eine Gesamtansicht der erfindungsgemäßen Abisolierzange mit geschlossenem Zangenmaul;
- Fig. 3: eine Prinzipdarstellung der Verschiebung eines Gleitkeils in Längsrichtung;
- Fig. 4: eine Detailansicht des Zangenmauls;
- Fig. 5: eine Detailansicht von Greifbacken mit Aufnahmebacken;
- Fig. 6: eine Detailansicht des Gleitkeils mit Lagesicherung.

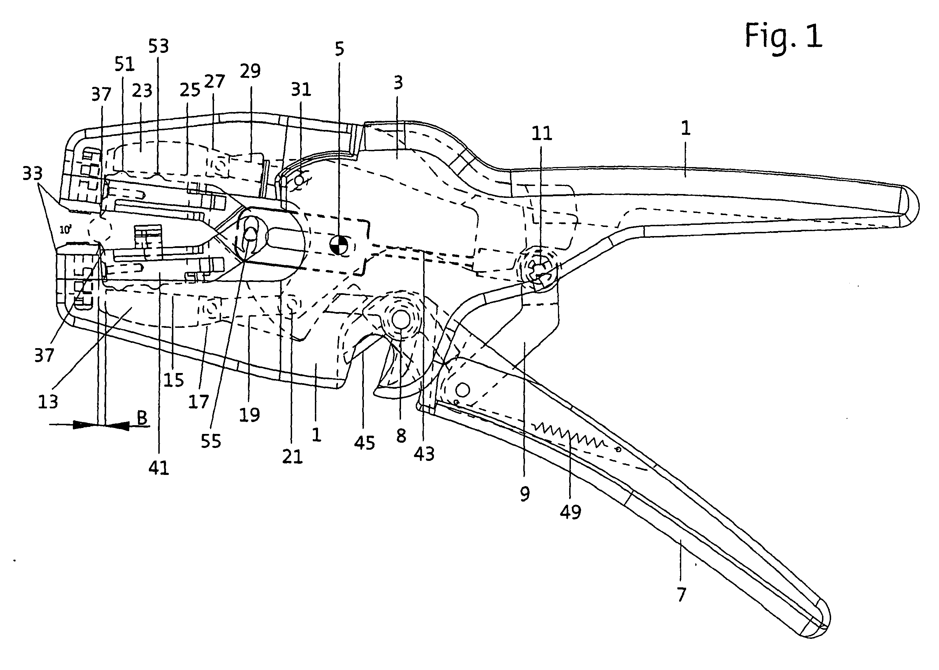

In Fig. 1 ist eine erfindungsgemäße Abisolierzange mit geöffnetem Zangenmaul in einer Gesamtdarstellung gezeigt. Die Abisolierzange umfasst einen ersten Zangenarm 1 und ein Backenteil 3, die einen gemeinsamen Drehpunkt 5 besitzen. Ein zweiter Zangenarm 7, der über eine Schwenkachse 8 mit dem ersten Zangenarm 1 verbunden ist, wirkt über einen Hebel 9 mit einer Rolle 11 auf das Backenteil 3 so ein, dass das Zangenmaul bei einer vom Benutzer bewirkten Schließbewegung der Zangenarme ebenfalls geschlossen wird.

In einer Aussparung im ersten Zangenarm 1 befindet sich ein erster Gleitkeil 13 mit einer zu der Zangenmaulöffnung gewandten ersten Gleitkeilfläche 15 und einer in der Aussparung anliegenden zweiten Gleitkeilfläche 17. Der erste Gleitkeil 13 ist über eine erste Koppelstange 19 mit dem Backenteil 3 verbunden. Zur Befestigung der ersten Koppelstange 19 im Backenteil 3 dient ein erster Stift 21.

Ein zweiter Gleitkeil 23 ist in einer Aussparung im Backenteil 3 gelagert. Er besitzt eine zu der Zangenmaulöffnung gewandte erste Gleitkeilfläche 25 und eine ist der Aussparung anliegende zweite Gleitkeilfläche 27. Der zweite Gleitkeil 23 steht über eine zweite Koppelstange 29 mit dem ersten Zangenarm 1 in Verbindung. Für den festen Sitz der zweiten Koppelstange 29 im ersten Zangenarm 1 sorgt ein zweiter Stift 31.

Die zur Maulöffnung gewandten ersten Gleitkeilflächen 15, 25 sind eben. Die in der Aussparung anliegenden zweiten Gleitkeilflächen 17, 27 sind bevorzugt so geformt, dass sich der Abstand jeweils zwischen den ersten und zweiten Gleitkeilflächen 15, 17 bzw. 25, 27 von einem mittleren Bereich der Gleitkeile 13, 23 ausgehend zu beiden Gleitkeilenden gleichmäßig verringert. Als besonders vorteilhaft hat sich eine Kreisbogenform erwiesen. Die zur Lagerung der Gleitkeile 13, 23 dienenden Aussparrungen sind an die Form der Gleitkeile 13, 23 angepasst und besitzen eine ebenfalls kreisbogenförmige Lauffläche, die den zweiten Gleitkeilflächen entspricht.

Die Abisolierzange ist weiterhin ausgestattet mit zwei Paaren schwenkbar gelagerter Backen. Die Backen des einen, äußeren Paares, sind als Greifbacken 33 ausgeführt und mit dem ersten Zangenarm 1 und dem Backenteil 3 bewegbar. Die Backen des anderen, inneren Paares, sind als Schneidbacken 41 ausgeführt, welche in die Isolation schneidend eindringende Schneidmesser 37 besitzen, die lösbar an den Schneidbacken befestigt sind. An den Schneidbacken 41 ist eine im Zangenkörper in Längsrichtung bewegliche, eine Abstreifbewegung bewirkende Zugstange 43 befestigt, die über den Hebel 9 mit dem zweiten Zangenarm 7 in Verbindung steht.

Zwischen erstem Zangenarm 1 und zweitem Zangenarm 7 befindet sich außerdem ein Drahtschneider 45 zum Ablängen der abzuisolierenden Kabel. Beim Schließen der Zangenarme schleißen sich auch die Abschneideklingen des Drahtschneiders, wobei durch die über die Schwenkachse 8 erzielte Hebelwirkung ein kraftsparendes Schneiden möglich wird.

Der Abisoliervorgang verläuft folgendermaßen. Das Kabel (nicht dargestellt) wird zwischen die Greifbacken 33 eingeführt, so dass der gewünschte, abzuisolierende Bereich hinter den Schneidmessern 37 zu liegen kommt. Dann wird beim Zusammendrücken der Zange der zweite, bewegliche Zangenarm 7 auf den ersten Zangenarm 1 zubewegt. Dabei wird über den Hebel 9, der an seinem einen Ende mit dem zweiten Zangenarm 7 verbunden ist und am anderen Ende über die Rolle 11 an den Backenteil 3 angelenkt ist, auch ein Verschwenken des Backenteils 3 um den Drehpunkt 5 bewirkt, womit das Zangenmaul geschlossen wird und die beiden Greifbacken 33 fest an den Kabelmantel angepresst werden. Dabei werden auch die Schneidbacken 41 in Schnittposition gebracht, wie es weiter unten noch detailliert beschreiben ist.

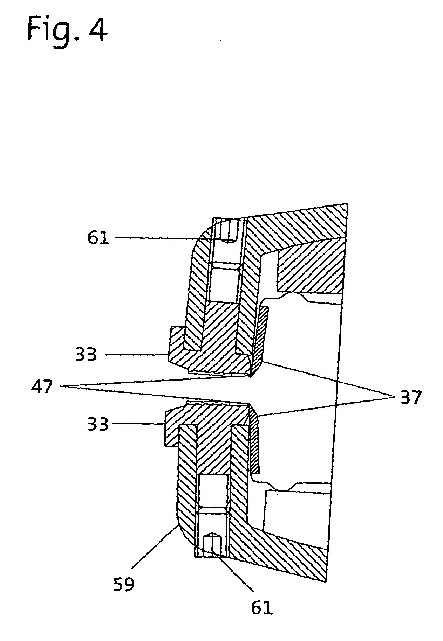

Die Greifbacken 33 weisen bevorzugt jeweils einen erhöhten Greifzahn 47 auf (siehe Fig. 4). Dieser erhöhte Greifzahn 47 und die Schneidmesser 37 besitzen einseitige spiegelbildliche Schneidschrägen. Der erhöhte Greifzahn 47 schneidet beim Schließen der Greifbacken 33 in den Kabelmantel ein und sorgt damit für eine zusätzliche Fixierung der am Kabel verbleibenden Isolation. Der Widerstand den die Greifbacken 33 am zusammengepressten Kabelmantel finden, verhindert eine weitere Schließbewegung.

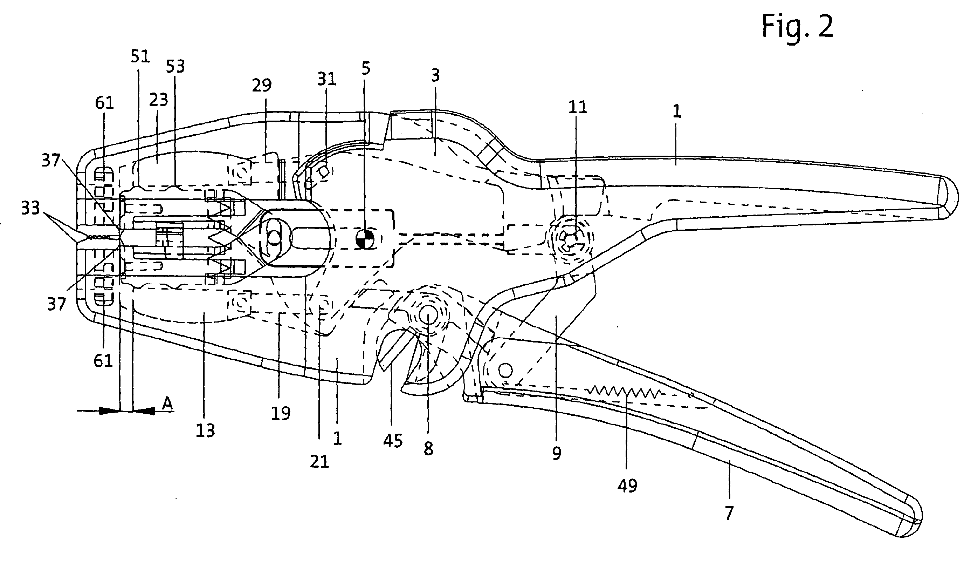

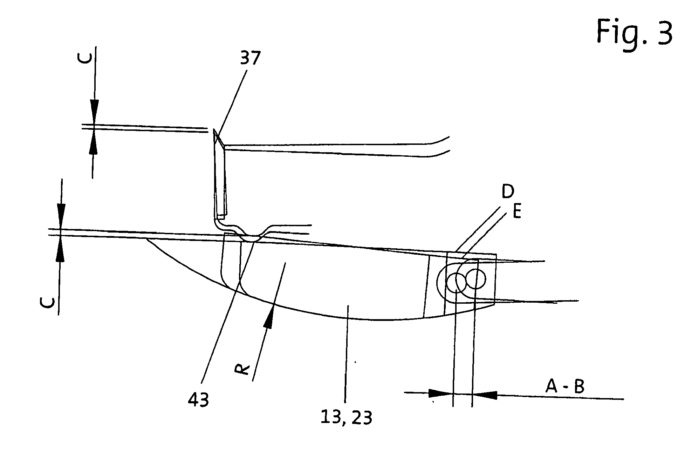

Die Einstellung der Schnitttiefe erfolgt dadurch, dass beim weiteren Zusammendrücken der Zange und der damit verbundenen Auslenkung des Backenteils 3 um den Drehpunkt 5 der erste Gleitkeil 13 über die mit dem Backenteil 3 verbundenen Zugstange 43 leicht von der Maulspitze weg gezogen wird. Dabei wird der erste Gleitkeil 13 um einen Betrag verschoben, der sich als Differenz der in den Fig. 1 und 2 eingezeichneten Abständen A und B zwischen vorderem Ende der Gleitkeile und vorderer Anschlagkante in der Aussparung ergibt. Durch diese Verschiebung werden die Schneidbacken 41 um den Zustellbetrag C geschlossen und gleichzeitig die Winkellage des ersten Gleitkeils 13 von der Position E nach Position D verändert (siehe Fig. 3).

Synchron dazu erfolgt über den fest über die Koppelstange 29 mit dem ersten Zangenarm 1 verbundenen zweiten Gleitkeil 23 eine Auslenkung des Backenteils 3, so dass eine Relativbewegung des zweiten Gleitkeils 23 gegenüber dem Backenteil 3 in gleicher Richtung wie beim ersten Gleitkeil 13 erfolgt. So erfolgt auch hier eine Zustellbewegung des Schneidbackens 41 senkrecht zur Längsverschiebung um den Betrag C und die Lagekorrektur des zweiten Gleitkeils 23 von E nach D. Durch die Wahl des der Figur 3 zu entnehmenden Rückenradius R der Gleitkeile 13, 23 kann die Zustellgröße C und die Lagekorrektur für unterschiedliche Anwendungsfälle optimiert werden.

Im weiteren Verlauf erfolgt das Abstreifen der Isolation vom Leiter dadurch, dass durch die Bewegung des Hebels 9 gegen die Zugfeder 49 die Schneidbacken 37, 39 über die mit dem Hebel 9 verbundene Zugstange 43 in Richtung Zangenmitte gezogen werden.

Während des Abstreifens besteht eine punktförmige Auflage der Schneidbacken 41 auf den ersten Gleitkeilflächen 15, 25. Diese Auflage wird über eine erste Erhöhung 51 auf der den ersten Gleitkeilflächen 15, 25 zugewandten Seite der Scheidbacken 41 realisiert. Außerdem befindet sich auf derselben Schneidbackenseite eine zweite Erhöhung 53. Diese zweite Erhöhung 53 zentriert die Mittelstellung der sich bewegenden Schneidbacken 41. Zu diesem Zweck ist in der Zugstange 43 ein Langloch 55 vorgesehen, so dass durch die Zugfeder 49 beide Schneidbacken 41 gleichmäßig an die Greifbacken 33 angelegt werden können.

Bei einer bevorzugten Ausführungsform wird bedingt durch die Form der zweiten Gleitkeilflächen 17, 27 beim Verschieben der Gleitkeile 13, 23 in Längsrichtung eine leichte Schrägstellung der ersten Gleitkeilflächen 15, 25 bewirkt. Beim Entlangführen der Schneidbacken 41 kommt es daher während des Abstreifens zu einer minimalen Öffnung der Schneidbacken 41 und der daran angeschraubten Schneidmesser 37.

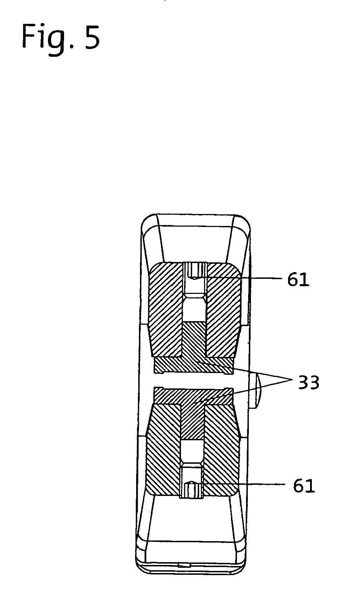

Fig. 4 zeigt eine Detailansicht eines Zangenmauls. Die Greifbacken 33 weisen jeweils den erhöhten Greifzahn 47 auf. Die Greifbacken können, wie in Fig. 5 dargestellt, als Zapfenaufnahme oder aber als zwei parallele Flachsäulen ausgeführt sein. An den Zapfen bzw. Flachsäulen befindet sich jeweils eine Verdickung 57, die ein Klemmen in den Aufnahmebacken 59 garantiert. Eine Höhenverstellung der Greifbacken 33 ist über eine Druckschraube 61 möglich. Diese Einstellung erfolgt in der Regel werkseitig.

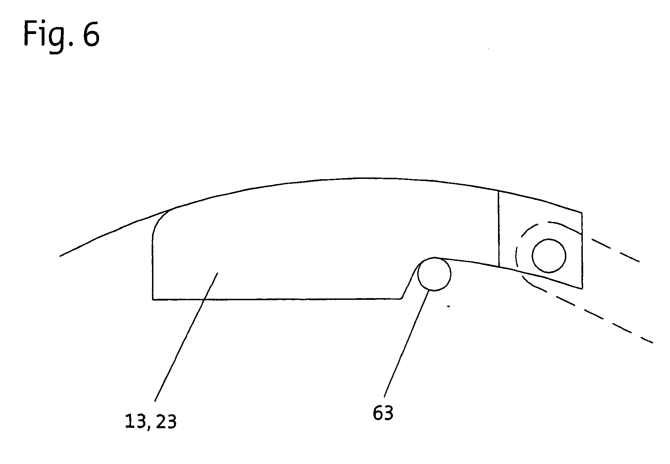

Fig. 6 ist zu entnehmen, dass zur Lagesicherung der Gleitkeile 13, 23 ein Sicherungsstift 63 dient. Die Gleitkeile 13, 23 werden somit gegen unerwünschte Lageveränderungen bei allen denkbaren Belastungsfällen zusätzlich abgesichert.

### Bezugszeichenliste:

- 1 -: erster Zangenarm
- 3 -: Backenteil
- 5 -: Drehpunkt
- 7 -: zweiter Zangenarm
- 8 -: Schwenkachse
- 9 -: Hebel
- 11 -: Rolle
- 13 -: erster Gleitkeil
- 15 -: erste Gleitkeilfläche des ersten Gleitkeils
- 17 -: zweite Gleitkeilfläche des ersten Gleitkeils
- 19 -: erste Koppelstange
- 21 -: erster Stift
- 23 -: zweiter Gleitkeil
- 25 -: erste Gleitkeilfläche des zweiten Gleitkeils
- 27 -: zweite Gleitkeilfläche des zweiten Gleitkeils
- 29 -: zweite Koppelstange
- 31 -: zweiter Stift
- 33 -: Greifbacken
- 37 -: Schneidmesser
- 41 -: Schneidbacken
- 43 -: Zugstange
- 45 -: Drahtschneider
- 47 -: erhöhter Greifzahn
- 49 -: Zugfeder
- 51 -: erste Erhöhung
- 53 -: zweite Erhöhung
- 55 -: Langloch
- 57 -: Verdickung
- 59 -: Aufnahmebacken
- 61 -: Druckschraube
- 63 -: Sicherungsstift

## Patentansprüche

1. Abisolierzange mit automatischer Anpassung an verschiedene Leiterquerschnitte und Isolationsdicken mit zwei Paaren schwenkbar gelagerter Backen, von denen die Backen des einen, äußeren Paares, als Greifbacken (33) ausgeführt sind und über einen ersten Zangenarm (1) und ein Backenteil (3), die einen gemeinsamen Drehpunkt (5) besitzen, bewegbar sind, und die Backen des anderen, inneren Paares, als Schneidbacken (41) mit in die Isolation schneidend eindringenden Schneidmessern (37) ausgeführt sind, und mit einer an den Schneidbacken (41) befestigten, im Zangenkörper in Längsrichtung beweglichen, eine Abstreifbewegung bewirkenden Zugstange (43), die über einen Hebel (9) mit einem zweiten Zangenarm (7) gekoppelt ist, **dadurch gekennzeichnet, dass** mindestens ein Gleitkeil (13, 23) in einer an die Form des Gleitkeils (13, 23) angepassten Aussparung im ersten Zangenarm (1) oder im Backenteil (3) gelagert ist, wobei eine zu den Schneidbacken (41) gewandte erste Gleitkeilfläche (15, 25) eben ist und eine in der Aussparung anliegende zweite Gleitkeilfläche (17, 27) so geformt ist, dass sich der Abstand zwischen beiden Gleitkeilflächen von einem mittleren Bereich des Gleitkeils (13, 23) ausgehend zumindest zu einem der beiden Gleitkeilenden verringert, und dass beim Zusammendrücken der Abisolierzange ein Verschieben des Gleitkeils (13, 23) in Längsrichtung mit gleichzeitiger Lageanpassung des Gleitkeils (13, 23) senkrecht zur Längsrichtung erfolgt, die eine Schneidtiefenverstellung der Schneidbacken (41) und der daran befestigten Schneidmesser (37) bewirkt.

2. Abisolierzange nach Anspruch 1, **dadurch gekennzeichnet, dass** ein erster Gleitkeil (13) in einer Aussparung im ersten Zangenarm (1) und ein zweiter Gleitkeil (23) in einer Aussparung im Backenteil (3) gelagert ist, und dass die zweiten Gleitkeilflächen (17, 27) der Gleitkeile (13, 23) kreisbogenförmig ist.

3. Abisolierzange nach Anspruch 2, **dadurch gekennzeichnet, dass** der erste Gleitkeil (13) über eine erste Koppelstange (19) mit dem Backenteil (3) und der zweite Gleitkeil (23) über eine zweite Koppelstange (29) mit dem ersten Zangenarm (1) verbunden ist, und dass beim Zusammendrücken der Abisolierzange ein Verschwenken des Backenteils (3) erfolgt, und die damit verbundene Verschiebung der ersten Koppelstange (19) ein Verschieben des ersten Gleitkeils (13) in Längsrichtung bewirkt, wobei synchron dazu die zweite Koppelstange (29) den zweiten Gleitkeil (23) festhält, das Backenteil (3) beim Bewegen um den zweiten Gleitkeil (23) durch diesen ausgelenkt wird und damit durch diese relative Verschiebung eine entsprechende Anpassung des zweiten Gleitkeils (23) erfolgt.

4. Abisolierzange nach einem der Ansprüche 1 bis 3, **dadurch gekennzeichnet, dass** die Schneidbacken (41) auf ihrer dem Gleitkeil (13, 23) zugewandten Seite eine erste Erhöhung (51) zum Herstellen einer punktförmigen Auflage der Schneidbacken (41) auf der ersten Gleitkeilfläche (15, 25) und eine zweite Erhöhung (53), die die Mittelstellung der sich bewegenden Schneidbacken (41) zentriert, aufweisen.

5. Abisolierzange nach einem der Ansprüche 1 bis 4, **dadurch gekennzeichnet, dass** die Greifbacken (33) jeweils einen erhöhten Greifzahn (47) aufweisen, und dass der erhöhte Greifzahn (47) und die Schneidmesser (37) einseitige spiegelbildliche Schneidschrägen aufweisen.

6. Abisolierzange nach einem der Ansprüche 1 bis 5, **dadurch gekennzeichnet, dass** die Form der zweiten Gleitkeilfläche (17, 27) beim Verschieben des Gleitkeils (13, 23) in Längsrichtung eine leichte Schrägstellung der ersten Gleitkeilfläche (15, 25) bewirkt, welche beim Entlangführen der Schneidbacken (41) während des Abstreifens zu einer leichten Öffnung der Schneidmesser (37) führt.

7. Abisolierzange nach einem der Ansprüche 1 bis 6, **dadurch gekennzeichnet, dass** die Schneidmesser (37) an den Schneidbackenhaltern (41) lösbar befestigt sind.

8. Abisolierzange nach einem der Ansprüche 1 bis 7, **dadurch gekennzeichnet, dass** die Greifbacken (33) in Aufnahmebacken (59) lösbar befestigt sind, und dass die Greifbacken (33) bezogen auf die Greifebene abstandsverstellbar sind.

9. Abisolierzange nach einem der Ansprüche 1 bis 8, **dadurch gekennzeichnet, dass** zwischen erstem Zangenarm (1) und zweitem Zangenarm (7) ein Drahtschneider (45) angeordnet ist.

## Claims

1. Stripping tongs with automatic adaptation to different conductor cross-sections and insulation thicknesses having two pairs of pivotably mounted jaws of which the jaws of the one, outer pair are constructed as clamping jaws (33) and are movable by way of a first arm (1) of the tongs and a jaw part (3), which have a common centre of rotation, and the jaws of the other, inner pair are constructed as cutting jaws (41) with cutting blades (37) which penetrate into the insulation in cutting manner, and having a pull rod (43) which is fixed to the cutting jaws (41), is movable in the longitudinal direction in the body of the tongs and effects a stripping movement, and which is coupled to a second arm (7) of the tongs by way of a lever (9), **characterised in that** at least one slide wedge (13, 23) is mounted in a cutout in the first arm (1) of the tongs or in the jaw part (3), said cutout being adapted to the shape of the slide wedge (13, 23), with a first slide wedge face (15, 25) facing the cutting jaws (41) being planar and a second slide wedge face (17, 27) lying in the cutout being shaped such that the spacing between both slide wedge faces reduces from a centre region of the slide wedge (13, 23) to at least one of the two slide wedge ends, and **in that**, when the stripping tongs are pressed together, the slide wedge (13, 23) is displaced in the longitudinal direction with a simultaneous positional adaptation of the slide wedge (13, 23) perpendicularly to the longitudinal direction, which effects an adjustment of the cutting depth of the cutting jaws (41) and the cutting blades (37) mounted thereon.

2. Stripping tongs according to Claim 1, **characterised in that** a first slide wedge (13) is mounted in a cutout in the first arm (1) of the tongs and a second slide wedge (23) is mounted in a cutout in the jaw part (3), and **in that** the second slide web faces (17, 27) of the slide wedges (13, 23) is arcuate.

3. Stripping tongs according to Claim 2, **characterised n that** the first slide wedge (13) is connected to the jaw part (3) by way of a first coupling rod (19) and the second slide wedge (23) is connected to the first arm (1) of the tongs by way of a second coupling rod (29), and in that the jaw part (3) pivots when the stripping tongs are pressed together, and the consequent displacement of the first coupling rod (19) effects a displacement of the first slide wedge (13) in the longitudinal direction whilst, synchronously thereto, the second coupling rod (29) holds the second slide wedge (23) fast, the jaw part (3) is deflected by the second slide wedge as it moves around this latter and a corresponding adjustment of the second slide wedge (23) is therefore effected as a result of this relative displacement.

4. Stripping tongs according to one of Claims 1 to 3, **characterised in that** the cutting jaws (41) have, on their side facing the slide wedge (13, 23), a first raised portion (51) for producing a point bearing of the cutting jaws (41) on the first slide wedge face (15, 25) and a second raised portion (53) which centres the central position of the moving cutting jaws (41).

5. Stripping tongs according to one of Claims 1 to 4, **characterised in that** the clamping jaws (33) each have a raised clamping tooth (47), and **in that** the raised clamping tooth (47) and the cutting blades (37) have mirror-inverted cutting bevels on one side.

6. Stripping tongs according to one of Claims 1 to 5, **characterised in that** the shape of the second slide wedge face (17, 27) during the displacement of the slide wedge (13, 23) effects a slight sloping position of the first slide wedge face (15, 25) in the longitudinal direction which, when the cutting jaws (41) are moved along during the stripping procedure, causes the cutting blades (37) to open slightly.

7. Stripping tongs according to one of Claims 1 to 6, **characterised in that** the cutting blades (37) are detachably mounted on the cutting jaw holders (41).

8. Stripping tongs according to one of Claims 1 to 7, **characterised in that** the clamping jaws (33) are detachably mounted in receiving jaws (59) and **in that** the spacing of the clamping jaws (33) is adjustable with respect to the clamping plane.

9. Stripping tongs according to one of Claims 1 to 8, **characterised in that** a wire cutter (45) is arranged between the first arm (1) of the tongs and the second arm (7) of the tongs.

## Revendications

1. Pince à dénuder avec adaptation automatique à différentes sections de conducteurs et à des épaisseurs d'isolation différentes, comprenant deux paires de mâchoires pivotantes, dont les mâchoires d'une paire, extérieure, sont des mâchoires de prise (33), mobiles par un premier bras de pince (1) une partie de mâchoire (3) ayant un point de rotation (5) commun avec celui-ci, et les mâchoires de l'autre paire, intérieure, sont des mâchoires de coupe (41) ayant des lames de coupe (37) qui pénètrent dans l'isolation, et une tige de traction (43) fixée aux mâchoires de coupe (41), mobile dans le corps de pince dans la direction longitudinale et couplée par un levier (9) à un deuxième bras de pince (7), entraîne un mouvement de dénudation
**caractérisée en ce qu'**
au moins une cale coulissante (13, 23) est logée dans un évidement adapté à la forme de la cale coulissante (13, 23), du premier bras de pince (1) ou dans la partie de mâchoire (3), une première surface de cale coulissante (15, 25) tournée vers les mâchoires de coupe (41) étant plane, et une deuxième surface de cale coulissante (17, 27) reposant dans l'évidement étant formée de sorte que la distance entre ces deux surfaces se réduise depuis une zone centrale de la cale coulissante (13, 23) vers au moins l'une de ses deux extrémités, et lors du serrage de la pince à dénuder la cale coulissante (13, 23) se déplace dans la direction longitudinale, sa position étant simultanément adaptée transversalement à la direction longitudinale, ce qui entraîne un réglage automatique de la profondeur de coupe des mâchoires de coupe (41) et des lames de coupe (37) fixées à celles-ci.

2. Pince à dénuder selon la revendication 1,
**caractérisée en ce qu'**
une première cale coulissante (13) est logée dans un évidement du premier bras de pince (1) et une deuxième cale coulissante (23) dans un évidement de la partie de mâchoire (3), et les deuxièmes surfaces (17, 27) des cales coulissantes (13, 23) présentent la forme d'un arc de cercle.

3. Pince à dénuder selon la revendication 2,
**caractérisée en ce que**
la première cale coulissante (13) est reliée à la partie de mâchoire (3) par une première tige de couplage (19) et la deuxième cale coulissante (23) au premier bras de pince (1) par une deuxième tige de couplage (29), et lors du serrage de la pince à dénuder un pivotement de la partie de mâchoire (3) s'effectue et le déplacement de la première tige de couplage (19) provoque celui de la première cale coulissante (13) dans la direction longitudinale, la deuxième tige de couplage (29) maintenant en même temps la deuxième cale coulissante (23), la partie de mâchoire (3) étant déviée par la deuxième cale coulissante (23) lors du mouvement autour de celle-ci, pour obtenir par ce déplacement relatif une adaptation appropriée de la deuxième cale coulissante (23).

4. Pince à dénuder selon l'une des revendications 1 à 3,
**caractérisée en ce que**
sur la face tournée vers la cale coulissante (13, 23) les mâchoires de coupe (41) présentent une première élévation (51) pour un appui ponctuel des mâchoires de coupe (41) sur la première surface de cale coulissante (15, 25), et une deuxième élévation (53) centre la position médiane des mâchoires de coupe (41) mobiles.

5. Pince à dénuder selon l'une des revendications 1 à 4,
**caractérisée en ce que**
les mâchoires de prise (33) présentent chacune une dent de prise élevée (47), et la dent de prise élevée (47) ainsi que les lames de coupe (37) présentent des biseaux de coupe unilatéraux asymétriques.

6. Pince à dénuder selon l'une des revendications 1 à 5,
**caractérisée en ce que**
lors du déplacement de la cale coulissante (13, 23) la forme de la deuxième surface de cale coulissante (17, 27) entraîne dans la direction longitudinale une légère inclinaison de la première surface de cale coulissante (15, 25) qui, lors du passage des mâchoires de coupe (41) pendant la dénudation, entraîne une légère ouverture des lames de coupe (37).

7. Pince à dénuder selon l'une des revendications 1 à 6,
**caractérisée en ce que**
les lames de coupe (37) sont fixées de manière amovible aux mâchoires de coupe (41).

8. Pince à dénuder selon l'une des revendications 1 à 7,
**caractérisée en ce que**
les mâchoires de prise (33) sont fixées de manière amovible dans des mâchoires de logement (59), et leur écartement est réglable par rapport au plan de prise.

9. Pince à dénuder selon l'une des revendications 1 à 8,
**caractérisée par**
un coupe-fil (45) par entre le premier bras de pince (1) et le deuxième bras de pince (7).
